# EUROPÄISCHE PATENTANMELDUNG

(11) **EP 1 632 396 A1**
(43) Veröffentlichungstag der Anmeldung: **08.03.2006**
(21) Anmeldenummer: 05016947.3
(22) Anmeldetag: 04.08.2005
(51) Int. Cl.: B60R 5/04

(54) **Laderaumabdeckung für ein Kraftfahrzeug**

(30) Priorität: 05.08.2004 DE 102004038227; 31.08.2004 DE 102004041960
(71) Anmelder: Boldt, Wilfried, 58456 Witten (DE)
(72) Erfinder: Boldt, Wilfried, 58456 Witten (DE)
(74) Vertreter: Wenzel & Kalkoff

(57) **Zusammenfassung**

Die Erfindung betrifft eine Laderaumabdeckung für ein Kraftfahrzeug mit einem Speicherelement und einem aus dem Speicherelement herausbewegbaren, zwischen einer Staulage und einer Funktionsposition verstellbaren flexiblen Flächengebilde. Die Erfindung betrifft ferner ein Kraftfahrzeug mit einer Laderaumabdeckung mit einem Speicherelement und einem aus dem Speicherelement herausbewegbaren flexiblen Flächengebilde. Um eine Laderaumabdeckung bereitzustellen, die einen einfachen Aufbau aufweist und sich komfortabel bedienen lässt bzw. um ein Kraftfahrzeug mit einer Laderaumabdeckung bereitzustellen, die einen hohen Bedienkomfort aufweist und eine gute Ausnutzung des Laderaums in jeder Gebrauchslage des Kraftfahrzeugs ermöglicht, weist die Laderaumabdeckung eine an dem Speicherelement anordbare Antriebseinheit mit einem Antriebselement auf, das derart mit dem Flächengebilde zusammenwirkt, dass das Flächengebilde bei einer in Richtung auf die Funktionsposition gerichteten Schließbewegung aus dem Speicherelement herausgeschoben und bei einer in Richtung auf die Staulage gerichteten Öffnungsbewegung in das Speicherelement zurückgezogen wird, bzw. weist das Kraftfahrzeug eine Laderaumabdeckung auf, bei der das Speicherelement in einem Laderaumboden in einer Rückenlehne, in einer Seitenwand oder an einem Dach angeordnet ist.

## Beschreibung

Die Erfindung betrifft eine Laderaumabdeckung für ein Kraftfahrzeug mit einem Speicherelement und einem aus dem Speicherelement herausbewegbaren, zwischen einer Staulage und einer Funktionsposition verstellbaren flexiblen Flächengebilde. Die Erfindung betrifft ferner ein Kraftfahrzeug mit einer Laderaumabdeckung mit einem Speicherelement und einem aus dem Speicherelement herausbewegbaren flexiblen Flächengebilde.

Bei Kraftfahrzeugen mit einer Heckklappe sorgt in der Regel eine Laderaumabdeckung der eingangs genannten Art dafür, dass ein Bereich des offenen Laderaums nicht von außen eingesehen werden kann. Das flexible Flächengebilde wird dazu in eine Funktionsposition überführt, in der dieses den Laderaum, bzw. einen Bereich des Laderaums oberhalb des Laderaumbodens im wesentlichen vollständig überdeckt. Um einen komfortablen Zugang zum Laderaum zu bekommen, ist es notwendig, das Flächengebilde zumindest teilweise in das Speicherelement zurück zu bewegen oder vollständig in die Staulage zu überführen, in der das Flächengebilde nahezu vollständig in dem Speicherelement angeordnet ist.

Insbesondere bei tief in den Innenraum der Fahrzeuge reichenden Laderäumen ist es zumeist besonders umständlich und mühselig, das Flächengebilde in Richtung auf das Speicherelement zu bewegen. Vor allem kleineren Menschen bereitet es erhebliche Probleme, sich so weit in den Laderaum zu beugen, bis das Flächengebilde in dem Speicherelement abgelegt ist. Der Trend zu immer größer werdenden Laderäumen verstärkt dabei dieses Problem zunehmend.

Die bekannten Laderaumabdeckungen weisen ferner den Nachteil auf, dass im Falle einer gewünschten Laderaumvergrößerung, wozu bei den meisten Kombi-Kraftfahrzeugen in der Regel die hintere Rücksitzbank anteilig oder vollständig umgeklappt werden kann, die vorzugsweise hinter den Rückenlehnen angeordnete Laderaumabdeckung störend wirkt, so dass sie umständlich ausgebaut werden muss. Verbleibt die Laderaumabdeckung hingegen im Fahrzeug, ragt sie in der Regel in den Laderaum hinein, wo sie eine optimale Platzausnutzung erschwert.

Zur Verbesserung der Bedienbarkeit sind bereits motorisch angetriebene Laderaumabdekkungen entwickelt worden. Diese weisen jedoch den Nachteil auf, dass sie komplizierte Seilzüge oder Faltmechanismen aufweisen, um einen reibungslosen Betrieb zu gewährleisten. Diese Verstellmechanismen sind jedoch sehr teuer und anfällig und benötigen einen großen Bauraum, der den verfügbaren Laderaum spürbar reduziert.

Der Erfindung liegt die Aufgabe zugrunde, eine Laderaumabdeckung bereitzustellen, die einen einfachen Aufbau aufweist und sich komfortabel bedienen lässt. Der Erfindung liegt ferner die Aufgabe zugrunde, ein Kraftfahrzeug mit einer Laderaumabdeckung bereitzustellen, die einen hohen Bedienkomfort aufweist und eine gute Ausnutzung des Laderaums in jeder Gebrauchslage des Kraftfahrzeugs ermöglicht.

Die Erfindung löst die Aufgabe durch eine Laderaumabdeckung gemäß den Merkmalen des Anspruchs 1 und durch ein Kraftfahrzeug gemäß den Merkmalen des Anspruchs 9. Vorteilhafte Weiterbildungen der Erfindungen sind in den abhängigen Ansprüchen angegeben.

Die erfindungsgemäße Laderaumabdeckung ist gekennzeichnet durch eine an dem Speicherelement anordbare Antriebseinheit mit einem Antriebselement, das derart mit dem Flächengebilde zusammenwirkt, dass es das Flächengebilde bei einer in Richtung auf die Funktionsposition gerichteten Schließbewegung aus dem Speicherelement herausschiebt und bei einer in Richtung auf die Staulage gerichteten Öffnungsbewegung in das Speicherelement zurückzieht.

Die erfindungsgemäße Anordnung der Antriebseinheit an oder in dem Speicherelement mit dem im wesentlichen direkt mit dem Flächengebilde zusammenwirkenden Antriebselement ermöglicht es, auf komplizierte Umlenkgetriebe, Seilsysteme, Schwenkgetriebe oder dergleichen zu verzichten, die einen erheblichen Installations-, Kosten- und Raumbedarf aufweisen.

Das Flächengebilde ist dabei so ausgestaltet, dass dieses durch das Antriebselement ohne weitere Zusatzeinrichtungen aus dem Speicherelement herausgeschoben oder in dieses zurückgezogen werden kann. Die dazu erforderliche Steifigkeit, die Voraussetzung für einen derartigen Antrieb ist, weist das Flächengebilde dabei zumindest an dem oder den Angriffspunkten des Antriebselements an dem Flächengebilde auf. Folglich erfolgt in jedem Fall eine Übertragung des Antriebsmoments in Bewegungsrichtung des Flächengebildes, so dass ein einwandfreier Betrieb der Laderaumabdeckung gewährleistet ist und es nicht zu ungewollten Stauungen des Flächengebildes oder andersartigen Fehlfunktionen kommt.

Zur Festlegung des Bewegungsablaufs wird das Flächengebilde vorzugsweise in zwei seitlich an den einander gegenüberliegenden Innenseiten des Laderaums angeordneten Führungen geführt, wodurch die Bewegungsrichtung des Flächengebildes vorgegeben ist.

Die Übertragung des Antriebsmoments von dem Antriebselement auf das Flächengebilde erfolgt dabei vorzugsweise durch ein form- und/oder kraftschlüssiges Zusammenwirken des Antriebselements mit dem Flächengebilde. Dabei besteht vorzugsweise ein direkter Kontakt zwischen dem Antriebselement und dem Flächengebilde, so dass auf zusätzliche Bauteile verzichtet werden kann.

Die Art der Antriebsübertragung hängt dabei im Einzelfall u.a. von der Einbaulage der Laderaumabdeckung in dem Kraftfahrzeug, der Größe der Laderaumabdeckung sowie der auftretenden Kräfte ab und kann grundsätzlich frei gewählt werden. So besteht bspw. die Möglichkeit, bei einer entsprechenden Ausgestaltung der Antriebseinheit, dass Antriebselement als einfache Antriebsrolle auszubilden, die entsprechend Ihrer Bewegungsrichtung das Flächengebilde kraftschlüssig aus dem Speicherelement herausschiebt oder in dieses zurückzieht, wobei ggf. zusätzlich eine oder mehrere Andruckrollen verwendet werden können, um einen besonders reibungsfreien Betrieb zu gewährleisten.

Nach einer besonders vorteilhaften Ausgestaltung der Erfindung ist das Antriebselement jedoch als profilierte Rolle, insbesondere als verzahnte Rolle ausgebildet, die mit einer entsprechenden Profilierung, insbesondere Verzahnung an dem Flächengebilde in Eingriff bringbar ist. Diese Ausgestaltung der Erfindung gewährleistet in besonders hohem Maße, dass das Antriebsmoment des Antriebselements ohne Schlupf auf das Flächengebilde übertragen wird. Zudem kann auf übermäßige Anpressdrücke zwischen dem Antriebselement und dem Flächengebilde verzichtet werden, die unter Umständen zu einem erhöhten Verschleiß der aufeinander abreibenden Funktionsteile oder zu einer Zerstörung des Flächengebildes führen können.

Unter Berücksichtigung der zumindest zum Teil bestehenden Anforderungen an die erforderliche Steifigkeit des Flächengebildes, die erforderlich ist, um zu gewährleisten, dass das Flächengebilde störungsfrei aus dem Speicherelement herausgeschoben und wieder in dieses zurückgezogen wird, ohne daß es insbesondere beim Herausschieben zu einer Stauung kommt, kann das Flächengebilde beliebig ausgebildet sein. Verwendbar sind bspw. Folien mit in Bewegungsrichtung des Flächengebildes verlaufenden flexiblen Streben oder dergleichen, wobei die Folienenden mit Kopplungselementen verbunden sein können, die ihrerseits mit dem Antriebselement in Eingriff bringbar ausgestaltet sein können und eine zuverlässige Übertragung des Antriebsmoments auf das Flächengebilde gewährleisten.

Nach einer besonders vorteilhaften Ausgestaltung der Erfindung ist das Flächengebilde jedoch aus miteinander gelenkig verbundenen Lamellen gebildet. Diese Ausgestaltung der Erfindung gewährleistet in besonderem Maße, dass das Flächengebilde zuverlässig in den in der Regel vorhandenen Führungen geführt wird und sich in der gewünschten Form über den Laderaumboden erstreckt.

Die gelenkige Verbindung der Lamellen ermöglicht es dabei zusätzlich, die Führungen in nahezu beliebiger Form auszugestalten, so dass das Flächengebilde in der an die Laderaumgeometrie angepassten Form über den Laderaum geführt werden kann. Ein weiterer Vorteil der Lamellen besteht darin, daß diese in besonders zuverlässiger Form das Antriebsmoment auf das gesamte Flächengebilde, d.h. auch auf die nicht mit dem Antriebselement im Eingriff befindlichen Lamellen übertragen.

Die in einer weiteren Ausgestaltung vorgesehene Ausbildung der Lamellen aus Metall, vorzugsweise Aluminium, weist den besonderen Vorteil auf, dass das Flächengebilde besonders stabil ist und somit das in dem Laderaum befindliche Gut in besonderer Weise vor Beschädigung schützt. Zugleich gewährleistet die Lamellenstruktur des Flächengebildes dass dessen Flexibilität beibehalten wird.

Um eine optimale Ausnutzung des Laderaums zu ermöglichen und um zu verhindern, dass die Laderaumabdeckung einen übermäßig großen Platzbedarf des Laderaums in Anspruch nimmt, ist nach einer weiteren Ausgestaltung der Erfindung vorgesehen, dass das Speicherelement in einen Laderaumboden, eine Seitenfläche, eine Rückenlehne oder ein Dach integrierbar ausgebildet ist. Diese Integrationsmöglichkeiten erlauben es, den gesamten durch die Abmessungen des Laderaums vorgegebenen Raum nutzen zu können. Bei der Anordnung im oder an dem Dach wird der in der Regel ungenutzte Dachbereich einer sinnvollen Verwendung zugeführt. Insbesondere die Möglichkeit, das Speicherelement flächig auszuführen und an einer Unterseite des Dachs anzubringen weist den Vorteil auf, daß kein Stauraum verloren geht. Zudem ist die Laderaumabdeckung besonders gut gegen Beschädigungen geschützt.

Diese Ausgestaltung der Erfindung erlaubt es zudem, die Laderaumabdeckung auch in solchen Fällen mitzuführen, in denen üblicherweise die Laderaumabdeckung aus dem Fahrzeug entfernt wird, um den Laderaum möglichst optimal nutzen zu können. Neben der normalen Nutzung des Laderaums ist dies insbesondere dann der Fall, wenn die Rücksitze zur Vergrößerung des Laderaums umgeklappt werden.

Im Falle der Anordnung des Speicherelements in dem Laderaumboden ist dieses in der Regel so ausgebildet, dass es in einem Bereich zwischen dem Laderaum und den den Laderaum von dem Fahrgastinnenraum abgrenzenden Rückenlehnen in den Laderaumboden integrierbar ist. Alternativ besteht ferner die Möglichkeit, das Speicherelement im Bereich eines durch eine Heckklappe verschließbaren Karosserie-Heckausschnitts in den Laderaumboden zu integrieren.

Nach einer vorteilhaften Weiterbildung der Erfindung weist das Speicherelement ferner zur Aufnahme des Flächengebildes eine Wickelrolle auf, auf der das Flächengebilde in der Staulage im wesentlichen vollständig aufgewickelt ist. Die Wickelrolle stellt eine mögliche Speicherform des Flächengebildes in der Staulage dar, welche in dem Kraftfahrzeug einen besonders geringen Raumbedarf beansprucht.

Alternativ dazu kann das Speicherelement nach einer weiteren Ausgestaltung der Erfindung auf der dem Laderaum abgewandten Seite des Laderaumbodens, des Dachs oder der Seitenwand angeordnet und derart ausgebildet sein, dass das Flächengebilde in der Staulage in einer ebenen Anordnung in dem Speicherelement abgelegt ist.

Gemäß dieser Weiterbildung der Erfindung wird das Flächengebilde flächig unter den Laderaumboden, in das Dach oder in die Seitenwand geführt, wobei aufgrund der vorzugsweise dünnen Ausgestaltung des Flächengebildes für dieses ein nur geringer Platzbedarf besteht. In der Staulage befindet sich das Flächengebilde dann in einer im wesentlichen parallelen Position zum Laderaumboden, zum Dach bzw. zur Seitenwand. Da sich der Laderaumboden und das Dach im wesentlichen über die gleiche Länge erstrecken, welche durch das Flächengebilde in der Funktionsposition überdeckt wird, ist es nicht erforderlich, das Flächengebilde in ergänzende Speicherräume zu führen. Gegenüber Fahrzeugen mit herkömmlichen Laderaumabdeckungen hat diese Ausgestaltung der Erfindung keine oder eine nur geringe Reduzierung des Laderaumvolumens zur Folge, da das Flächengebilde äußerst dünn ausgeführt sein kann.

Das erfindungsgemäße Kraftfahrzeug mit einer Laderaumabdeckung ist dadurch gekennzeichnet, dass das Speicherelement in einem Laderaumboden, in einer Rückenlehne, in einer Seitenwand oder an einem Dach angeordnet ist. Diese Ausgestaltung des Kraftfahrzeugs erlaubt es, das Flächengebilde bei Bedarf vollständig in dem Laderaumboden, der Rückenlehne, der Seitenwand oder dem Dach anzuordnen, so dass die Laderaumabdeckung dann keinen Raum des Laderaums beansprucht. Im Falle der Anordnung des Speicherelements an dem Dach besteht sowohl die Möglichkeit dieses in das Dach zu integrieren, als auch dieses an der dem Innenraum zugewandten Seite des Dachs anzuordnen, da das Dach in der Regel nicht mit dem Ladegut in Kontakt kommt und somit keine Gefahr der Beschädigung der derart angeordneten Laderaumabdeckung besteht.

Vorteilhafterweise ist dabei die Laderaumabdeckung so ausgestaltet, dass das in der Staulage in der Regel aus dem Speicherelement herausragende Ende des Flächengebildes im wesentlichen bündig zum Laderaumboden, Dach, Rückenlehne oder Seitenwand angeordnet ist. Dabei kann gemäß einer besonders vorteilhaften Ausgestaltung der Erfindung das Ende auch als ein das Speicherelement abschließender Deckel ausgebildet sein, der das Speicherelement in der Staulage auch vor Beschädigung und Verschmutzung schützt.

Nach einer weiteren Ausgestaltung der Erfindung sind im Falle der Anordnung des Speicherelements am Dach oder im Laderaumboden an den Seitenflächen des Laderaums, im wesentlichen parallel zum Ladeboden und/oder im Bereich zwischen dem Laderaum und einem Fahrgastinnenraum an den Seitenflächen des Fahrzeuginnenraums, im wesentlichen senkrecht zum Ladeboden Führungen angeordnet, die zur Aufnahme der seitlichen Enden des Flächengebildes ausgebildet sind. Im Falle der alternativen Ausgestaltung, wonach das Speicherelement im Bereich der Heckklappe im Laderaumboden integriert ist, verlaufen die senkrecht zum Ladeboden angeordneten Führungen nahe des Karosserie-Heckausschnitts.

Die Verwendung von Führungen gemäß dieser Weiterbildung der Erfindung gewährleistet im besonders hohem Maße, dass das Flächengebilde störungsfrei zwischen der Funktionsposition und der Staulage bewegt werden kann. Die parallel zum Ladeboden ausgebildeten Führungen dienen dabei dazu, das Flächengebilde über einen Bereich des Laderaums zu führen, so dass dieser von außen nicht einsehbar ist.

Die senkrecht zum Ladeboden verlaufenden Führungen dienen bei der Anordnung des Speicherelements hinter den Rückenlehnen hingegen zur Sicherung des Laderaums gegenüber dem Fahrgastinnenraum, wobei insbesondere im Falle eines Unfalls das Flächengebilde eine Rückhaltefunktion gegenüber dem im Laderaum befindlichen Gut erfüllt, welches unter Umständen zu erheblichen Verletzungen der im Fahrgastinnenraum befindlichen Person führen kann.

Die Auswahl der Funktionsweise des Flächengebildes - als Laderaumabdeckung oder als Abgrenzung des Fahrgastinnenraums - kann nach einer vorteilhaften Weiterbildung der Erfindung im Falle der Verwendung von sowohl in senkrechter als auch in paralleler Richtung zum Ladeboden verlaufenden Führungen vorzugsweise über eine die Führungen verbindende Weiche realisiert werden. Die Weiche, die bspw. als Funktionsscheibe mit entsprechenden die jeweiligen Führungen verbindenden Nuten ausgebildet ist, kann dabei als einfache Scheibe mit entsprechenden Führungen oder dergleichen ausgestaltet sein.

Nach einer besonders vorteilhaften Ausgestaltung der Erfindung sind die Führungen in die Seitenflächen des Kraftfahrzeugs integriert, so daß keine in den Laderaum vorstehenden Bauteile vorhanden sind. Zudem verbessert diese Ausgestaltung der Erfindung die Optik des Laderaums. Die Führungen selbst können dabei beliebig, bspw. als T-Nut oder dergleichen ausgeführt werden.

Ausführungsbeispiele der Erfindung werden nachstehend mit Bezug auf die Zeichnungen näher erläutert. In den Zeichnungen zeigen:
- Fig. 1: eine perspektivische Darstellung eines Heckbereichs eines ersten Kraftfahrzeuges mit einer Ausführungsform einer Laderaumabdeckung mit einem kastenförmigen Speicherelement;
- Fig. 2: ein schematischer Längsschnitt des Fahrzeuginnenraums von Fig. 1;
- Fig. 3: eine vergrößerte Schnittansicht des Speicherelements der Laderaumabdeckung von Fig. 1;
- Fig. 4: eine perspektivische Darstellung eines Heckbereichs eines zweiten Kraftfahrzeugs mit einer Ausführungsform einer Laderaumabdeckung mit einem flächigen Speicherelement;
- Fig. 5: ein schematischer Längsschnitt des Fahrzeuginnenraums von Fig. 4;
- Fig. 6: eine vergrößerte Ansicht eines Teils des Speicherelements mit dem darin angeordneten Antriebselement von Fig. 5;
- Fig. 7: eine perspektivische Darstellung eines Heckbereichs eines dritten Kraftfahrzeugs mit einem im Bereich eines Karosserie-Heckaus-schnitts in einen Laderaumboden integrierten Speicherelement;
- Fig. 8: ein schematischer Längsschnitt des Fahrzeuginnenraums von Fig. 7;
- Fig. 9: eine vergrößerte Schnittansicht des Speicherelements der Laderaumabdeckung von Fig. 8;
- Fig. 10: eine perspektivische Darstellung eines Heckbereichs eines vierten Kraftfahrzeugs mit einer Ausführungsform einer Laderaumabdeckung mit einem in eine Rückenlehne integrierten kastenförmigen Speicherelement;
- Fig. 11: ein schematischer Längsschnitt des Fahrzeuginnenraums von Fig. 10;
- Fig. 12: eine vergrößerte Schnittansicht des Speicherelements der Laderaumabdeckung von Fig. 10;
- Fig. 13: eine perspektivische Darstellung eines Heckbereichs eines fünften Kraftfahrzeugs mit einer Ausführungsform einer Laderaumabdeckung mit einem in einer Staulage unter dem Dach angeordneten flexiblen Flächengebilde;
- Fig. 14: ein schematischer Längsschnitt des Fahrzeuginnenraums von Fig. 13 und
- Fig. 15: eine vergrößerte Schnittansicht eines Teils des Speicherelements von Fig. 13 mit dem daran angeordneten Antriebselement.

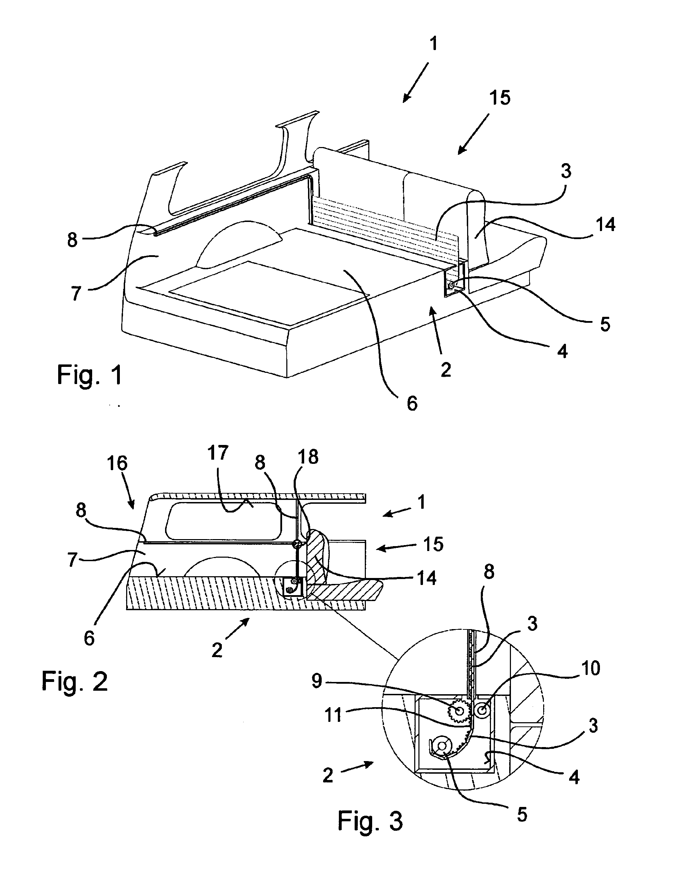

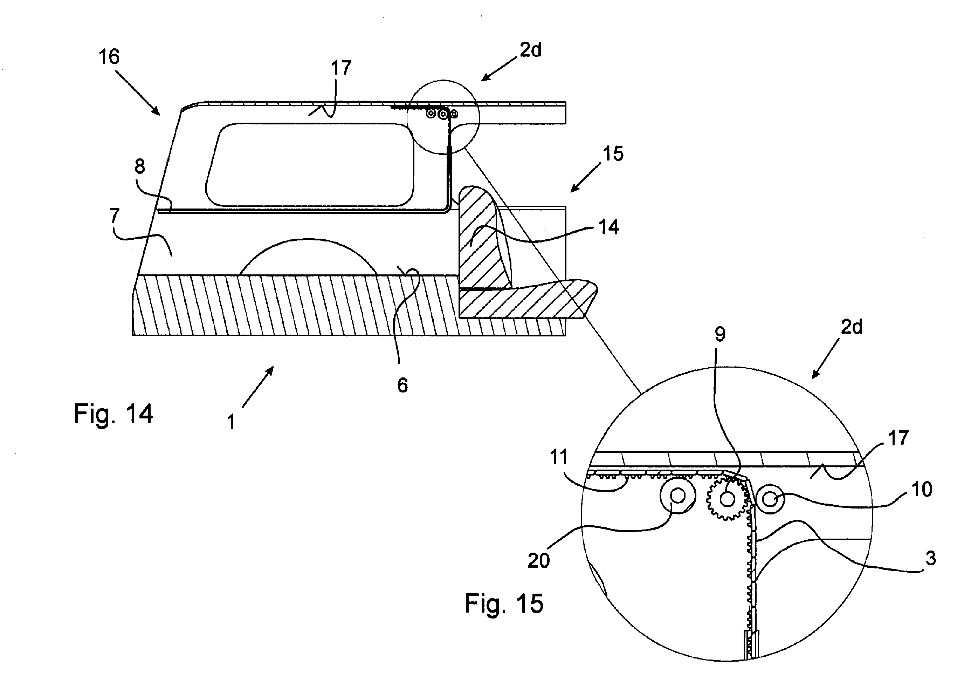

Ein in Fig. 1, Fig. 4, Fig. 7, Fig. 10 und Fig. 15 dargestellter Kombi-Personenkraftwagen 1 weist einen Laderaum auf, der in Fahrzeuglängsrichtung nach vorne durch Rückenlehnen 14 einer Rücksitzbank 15 und in Fahrzeuglängsrichtung nach hinten durch einen mittels einer hier nicht dargestellten Heckklappe verschließbaren Karosserie-Heckausschnitt 16 begrenzt ist. Seitlich sowie oben und unten ist der Laderaum durch Seitenflächen 7 des Fahrzeuginnenraums bzw. einen Laderaumboden 6 und ein Dach 17 des Personenkraftwagens 1 begrenzt.

Zur Abdeckung eines Teils des Laderaums weist der in Fig. 1 dargestellte Kombi-Personenkraftwagen 1 ein im Bereich hinter den Rückenlehnen 14 in den Laderaumboden 6 eingelassenes Speicherelement 4 einer ersten Ausführungsform einer Laderaumabdekkung 2 auf.

Das Flächengebilde 3 der Laderaumabdeckung 2 wird über an den einander gegenüberliegenden Seitenflächen 7 des Laderaums angeordneten Führungen 8 geführt. Die Führungen 8 erstrecken sich dabei im Bereich hinter den Rückenlehnen 14 im wesentlichen senkrecht zum Laderaumboden 6 und gehen in einem Bereich knapp unterhalb der Oberkante der Rückenlehnen 14 in einen Bereich über, in der die Führungen 8 im wesentlichen parallel zum Laderaumboden 6 angeordnet sind.

In der Funktionsposition, in der das Flächengebilde 3 einen Bereich des Laderaums vollständig überdeckt, ist das Flächengebilde 3 mit seinem vorderen Ende im Bereich der der Heckklappe zugewandten Enden der Führungen 8 angeordnet. Neben der hier gewählten Anordnung der Führungen 8 auf den Seitenflächen 7 ist auch eine Integration der Führungen 8 in die Seitenflächen 7 möglich.

Das Flächengebilde 3 ist aus einzelnen gelenkig miteinander verbundenen Aluminium-Lamellen gebildet, die auf ihrer dem abzugrenzenden Teil des Laderaums zugewandten Seite eine zahnförmig ausgebildete Profilierung 11 aufweisen. Dieses Flächengebilde 3 ist besonders leicht und stabil.

In dem Speicherelement 4 ist eine durch eine hier nicht dargestellte Antriebseinheit angetriebene verzahnte Rolle 9 angeordnet, die mit der Profilierung 11 der einzelnen Lamellen des Flächengebildes 3 in Eingriff steht. Eine auf der der verzahnten Rolle 9 gegenüberliegenden Seite des Flächengebildes 3 angeordnete Andruckrolle 10 gewährleistet, den ständigen Kontakt der verzahnten Rolle 9 mit der Profilierung 11 (vgl. Fig. 2 und 3).

Ein Antrieb der verzahnten Rolle 9 bewirkt in Abhängigkeit von der Drehrichtung ein Herausschieben des starren Flächengebildes 3 aus dem Speicherelement 4 bzw. ein Zurückziehen in das Speicherelement 4.

In der Staulage, in der das Flächengebilde 3 im wesentlichen vollständig in dem Speicherelement 4 angeordnet ist, ist dieses in dem in den Figuren 1-3 dargestellten Ausführungsbeispiel auf einer Wickelrolle 5 aufgerollt, die synchron zur verzahnten Rolle 9 angetrieben ist.

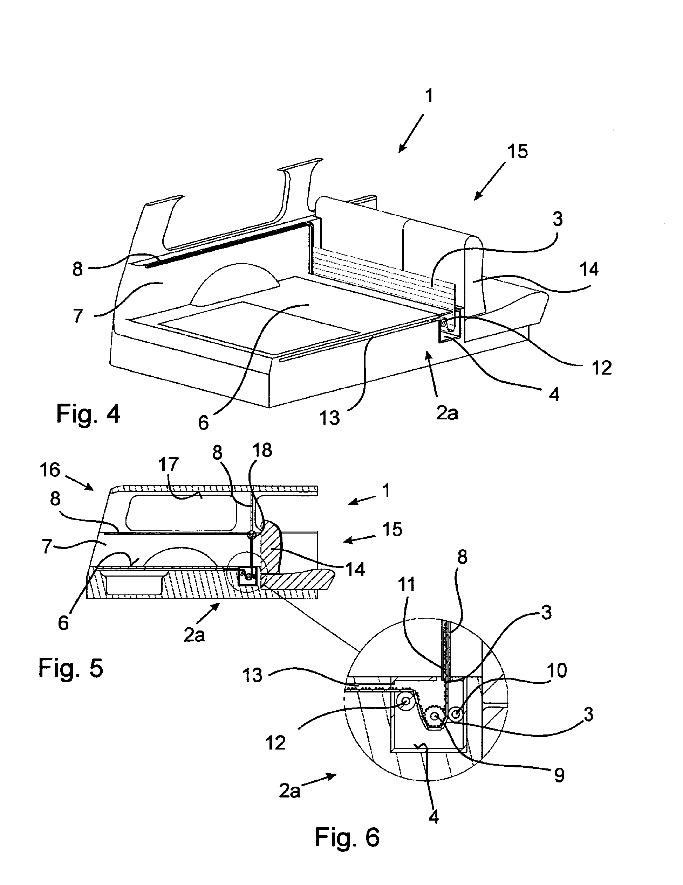

In einer alternativen in den Fig. 4-6 dargestellten Ausführungsform der Laderaumabdekkung 2a erstreckt sich das Speicherelement 4 über einen Bereich unterhalb des Laderaumbodens 6. Der Antrieb des Flächengebildes 3 erfolgt in der oben genannten Weise durch eine verzahnte Rolle 9 und eine das Flächengebilde 3 auf die verzahnte Rolle 9 drückende Andrückrolle 10.

Im Gegensatz zu den in Fig. 1-3 dargestellten Ausführungsbeispielen weist das hier dargestellte Ausführungsbeispiel keine Wickelrolle 5 sondern nur eine Umlenkrolle 12 auf, die das Flächengebilde 3 in den unterhalb des Laderaumbodens 6 befindlichen Bereich 13 des Speicherelements 4 lenkt. Diese Ausführungsform ermöglicht es, die das Antriebselement 9 tragende Baueinheit gegenüber dem in Fig. 1-3 dargestellten Ausführungsbeispiel kleiner auszuführen.

Gemäß einer in den Fig. 2 und 5 dargestellten Ausführungsform der Erfindung können hinter den Rückenlehnen 14 zusätzlich Führungen 8 angeordnet sein, die sich vom Dach 17 des Personenkraftwagens 1 bis zum Laderaumboden 6 erstrecken, so dass das Flächengebilde 3 als Abgrenzung des Fahrgastinnenraums zum Laderaum dient. Alternativ besteht ferner die Möglichkeit, allein die sich vom Dach 17 bis zum Laderaumboden 6 erstreckenden Führungen 8 zu verwenden.

Bei der Verwendung von Führungen 8 sowohl zur Laderaumabdeckung als auch zur Abgrenzung des Fahrgastinnenraums kann eine Weiche 18 eingesetzt werden, die in Abhängigkeit von ihrer Stellung das Flächengebilde 3 in die jeweilige Führung 8 leitet.

In den in Fig. 2 und 5 dargestellten Ausführungsbeispielen ist die Weiche 18 dazu als drehbare Scheibe ausgebildet, die derart verdreht werden kann und entsprechende Führungen aufweist, daß das Flächengebilde 3 ausgehend von der hinter der Rückenlehne 14 angeordneten Führung entweder in die Funktionsstellung als Laderaumabdeckung oder in die Funktionsstellung zur Abgrenzung des Fahrgastinnenraums geführt wird.

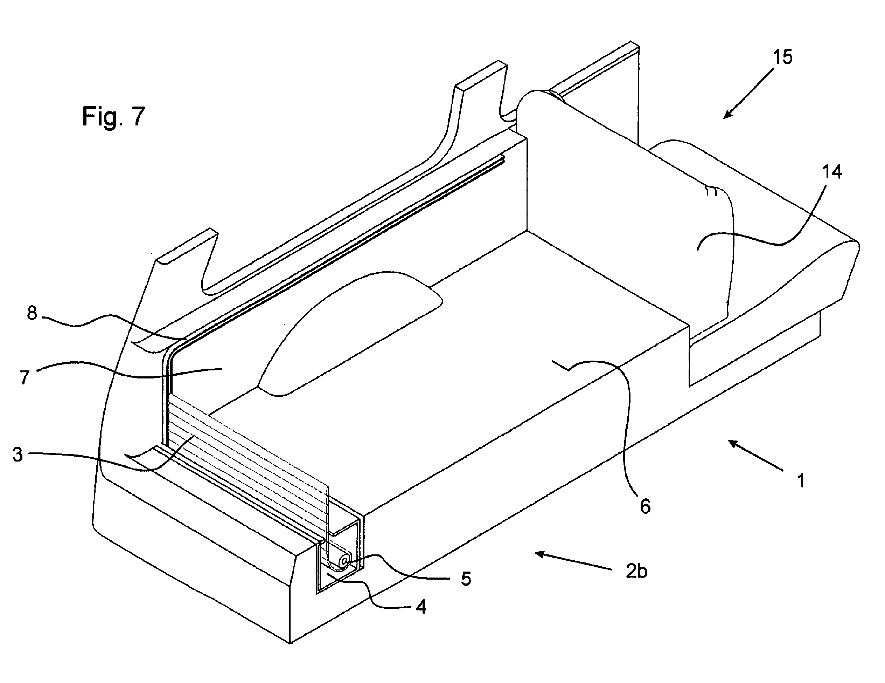

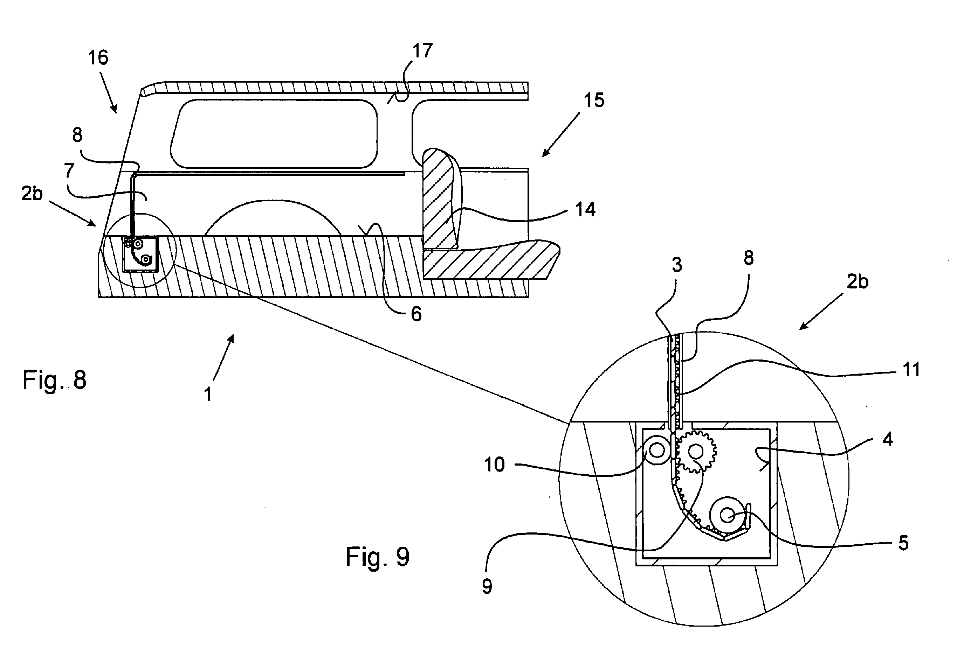

Bei dem in den Fig. 7-9 dargestellten weiteren Ausführungsbeispiel ist das kastenförmige Speicherelement 4 der Laderaumabdeckung 2b im Bereich des durch die Heckklappe verschließbaren Karosserie-Heckausschnitts 16 im Laderaumboden 6 angeordnet. Im Gegensatz zu den vorherigen Ausführungsformen wird das Flächengebilde 3 beim Übergang aus der Staulage in die Funktionsposition in Richtung auf die Rücksitzbank 15 bewegt. Im übrigen entspricht die Funktionsweise der Funktionsweise der Laderaumabdeckung 2 gemäß der Fig. 1-3.

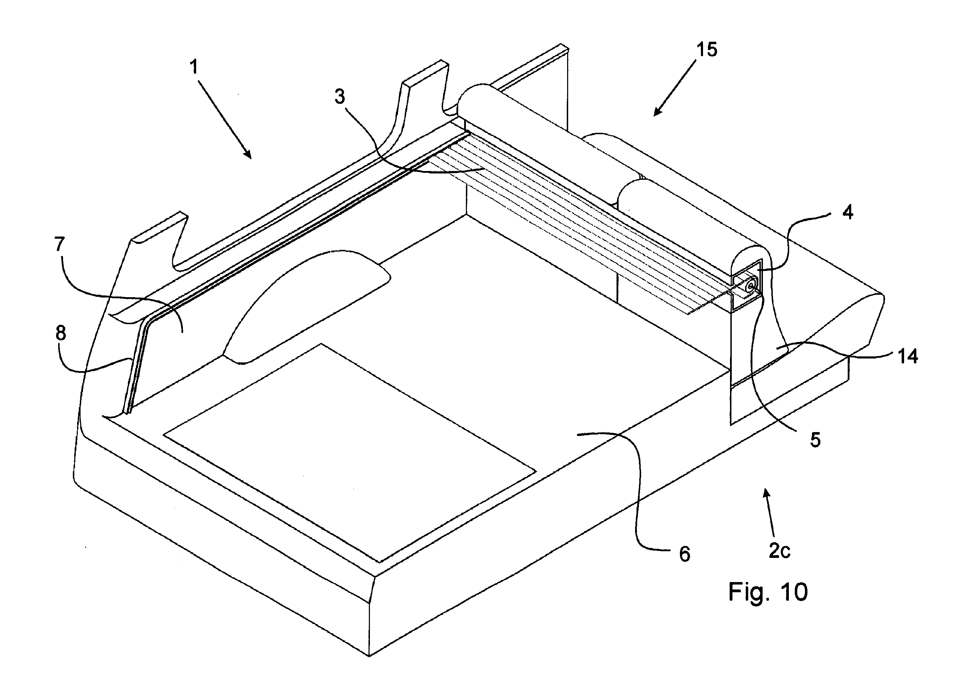

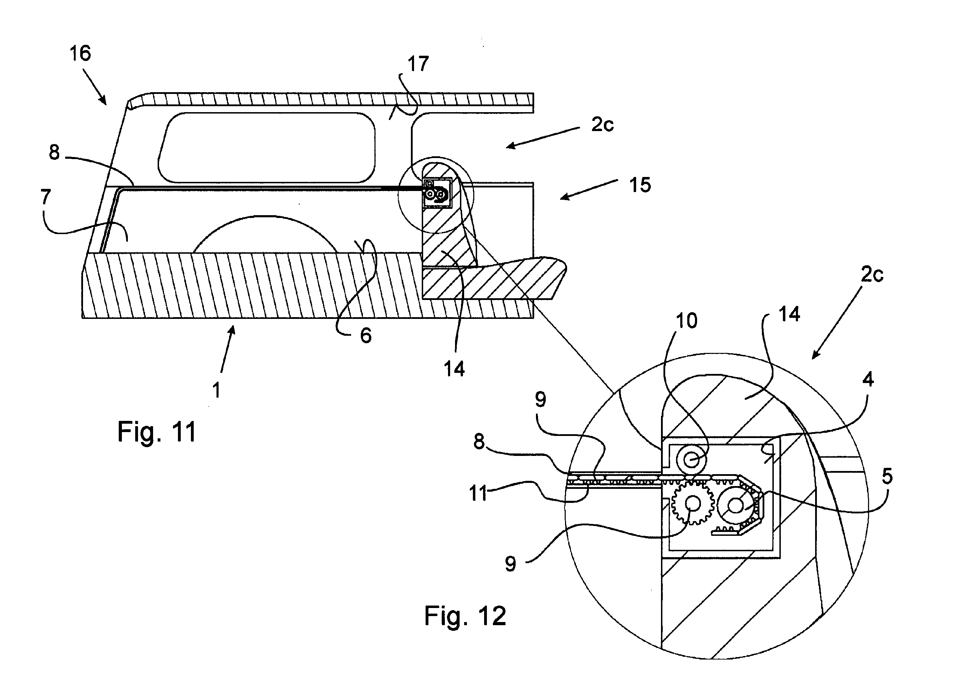

Die in den Fig. 10-12 dargestellte Laderaumabdeckung 2c stellt eine weitere Ausführungsform der Anordnung des Speicherelements 4 dar, welches in die Rückenlehne 14 der Rücksitzbank 15 integriert ist. Die Funktionsweise entspricht der Funktionsweise der zuvor geschilderten Laderaumabdeckungen 2-2b, wobei allein die Laderaumabdekkungen 2a und 2b im Bereich des Karosserie-Heckausschnitts 16 Führungen 8 aufweisen, so daß ein Bereich des Laderaums auch bei geöffneter Heckklappe vollständig durch das sich in der Funktionsposition befindliche Flächengebilde 3 abgeteilt werden kann.

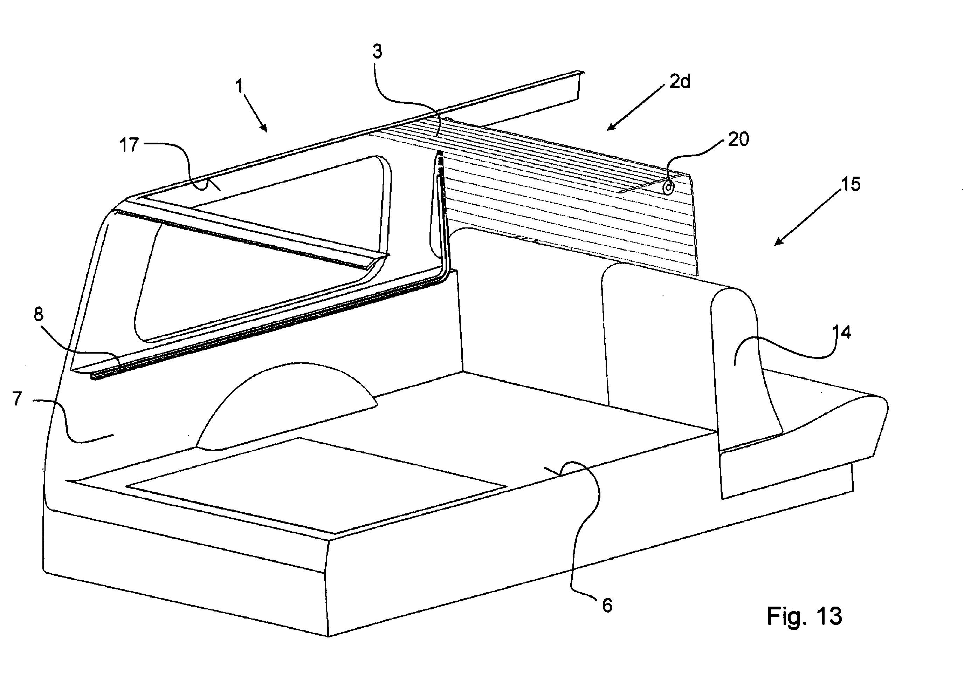

In einer letzten in den Fig. 13-15 dargestellten Ausführungsform ist die Laderaumabdeckung 2d an der dem Laderaum zugewandten Seite des Dachs 17 angeordnet, wobei in einer alternativen, hier nicht dargestellten Variante auch die Integration des Speicherelements 4 (flächig oder kastenförmig), in das Dach 17 möglich ist.

In der hier dargestellten Ausführungsform der Laderaumabdeckung 2d wird das Flächengebilde 3 flächig an der Unterseite des Dachs 17 geführt, so daß das Flächengebilde 3 das Dach 17 in der Staulage im wesentlichen vollständig überdeckt.

Die Überführung des Flächengebildes 3 in die Funktionsposition erfolgt analog zu den zuvor geschilderten Ausführungsformen, wobei eine Führungsrolle 20 die Anlage und Führung des Flächengebildes 3 an dem Dach 17 gewährleistet.

Gemäß einer weiteren, hier nicht dargestellten Ausführungsform besteht die Möglichkeit, das Speicherelement 4 auch in die Seitenwand 7 des Laderaums zu integrieren.

## Patentansprüche

1. Laderaumabdeckung für ein Kraftfahrzeug mit
- einem Speicherelement und
- einem aus dem Speicherelement herausbewegbaren, zwischen einer Staulage und einer Funktionsposition verstellbaren flexiblen Flächengebilde,
**gekennzeichnet durch** eine an dem Speicherelement (4) anordbare Antriebseinheit mit einem Antriebselement (9) das derart mit dem Flächengebilde (3) zusammenwirkt, dass das Flächengebilde (3) bei einer in Richtung auf die Funktionsposition gerichteten Schließbewegung aus dem Speicherelement (4) herausgeschoben und bei einer in Richtung auf die Staulage gerichteten Öffnungsbewegung in das Speicherelement (4) zurückgezogen wird.

2. Laderaumabdeckung nach Anspruch 1, **dadurch gekennzeichnet, dass** das Antriebselement (9) form- und/oder kraftschlüssig mit dem Flächengebilde (3) zusammenwirkt.

3. Laderaumabdeckung nach Anspruch 1 oder 2, **dadurch gekennzeichnet, dass** das Antriebselement als profilierte Rolle, insbesondere verzahnte Rolle (9) ausgebildet ist, die mit einer entsprechenden Profilierung, insbesondere Verzahnung (11) an dem Flächengebilde (3) in Eingriff bringbar ist.

4. Laderaumabdeckung nach einem der vorangehenden Ansprüche , **dadurch gekennzeichnet, dass** das Flächengebilde (3) aus miteinander gelenkig verbundenen Lamellen gebildet ist.

5. Laderaumabdeckung nach einem der vorangehenden Ansprüche, **dadurch gekennzeichnet, dass** die Lamellen aus Metall, vorzugsweise aus Aluminium gebildet sind.

6. Laderaumabdeckung nach einem der vorangehenden Ansprüche, **dadurch gekennzeichnet, dass** das Speicherelement (4) in einen Laderaumboden (6), eine Seitenfläche (7), eine Rückenlehne (14) oder ein Dach (17) integrierbar ausgebildet ist.

7. Laderaumabdeckung nach einem der vorangehenden Ansprüche, **dadurch gekennzeichnet, dass** das Speicherelement (4) zur Aufnahme des Flächengebildes (3) eine Wickelrolle (5) aufweist.

8. Laderaumabdeckung nach einem der vorangehenden Ansprüche, **dadurch gekennzeichnet, dass** das Speicherelement (4) auf der dem Laderaum abgewandten Seite des Laderaumbodens (6), des Dachs (7) oder der Seitenwand (7) angeordnet und derart ausgebildet ist, dass das Flächengebilde (3) in der Staulage in einer ebenen Anordnung in dem Speicherelement (4) abgelegt ist.

9. Kraftfahrzeug mit einer Laderaumabdeckung, die
- ein Speicherelement und
- ein aus dem Speicherelement herausbewegbares, zwischen einer Staulage und einer Funktionsposition verstellbares flexibles Flächengebilde aufweist,
**dadurch gekennzeichnet, dass** das Speicherelement (4) in einem Laderaumboden (6), in einer Rückenlehne (14), in einer Seitenwand (7) oder an einem Dach (17) angeordnet ist.

10. Kraftfahrzeug nach Anspruch 9, **dadurch gekennzeichnet, dass** ein in der Staulage aus dem Speicherelement (4) herausragendes Ende des Flächengebildes (3) im wesentlichen bündig zum Laderaumboden (6), Dach (17), Rückenlehne (14) oder Seitenwand (7) angeordnet ist.

11. Kraftfahrzeug nach Anspruch 9 oder 10, **dadurch gekennzeichnet, daß** das in der Funktionsposition im Laderaum angeordnete Ende des Flächengebildes (3) als ein das Speicherelement (4) abschließender Deckel ausgebildet ist.

12. Kraftfahrzeug nach einem der Ansprüche 9-11, **dadurch gekennzeichnet, dass** an den Seitenflächen (7) des Laderaums, im wesentlichen parallel zum Ladeboden (6) und/oder im Bereich zwischen dem Laderaum und einem Fahrgastinnenraum an den Seitenflächen (7) des Fahrzeuginnenraums, im wesentlichen senkrecht zum Ladeboden (6) Führungen (8) angeordnet sind, die zur Aufnahme der seitlichen Enden des Flächengebildes (3) ausgebildet sind.

13. Kraftfahrzeug nach einem der Ansprüche 9-12, **dadurch gekennzeichnet, dass** die Führungen (8) über eine Weiche (18) miteinander verbunden sind.

14. Kraftfahrzeug nach einem der Ansprüche 9-13, **dadurch gekennzeichnet, dass** die Führungen (8) in die Seitenflächen (7) integriert sind.

15. Kraftfahrzeug nach einem der Ansprüche 9-14, **gekennzeichnet durch** eine Laderaumabdeckung (2, 2a, 2b, 2c, 2d) gemäß einem oder mehreren der Ansprüche 1-8.
